# EUROPEAN PATENT APPLICATION

(11) **EP 4 436 284 A1**
(43) Date of publication of application: **25.09.2024**
(21) Application number: 21964808.6
(22) Date of filing: 19.11.2021
(51) Int. Cl.: H04W 72/04, H04W 28/06

(54) **TERMINAL, BASE STATION, AND COMMUNICATION METHOD**

(71) Applicant: NTT DOCOMO, INC., Tokyo 100-6150 (JP)
(72) Inventor: TAKAHASHI, Yuki, Tokyo 100-6150 (JP); KUMAGAI, Shinya, Tokyo 100-6150 (JP); YOSHIOKA, Shohei, Tokyo 100-6150 (JP); OKAMURA, Masaya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2021/042694
(87) International publication number: WO 2023/089793

(57) **Abstract**

A terminal includes: a reception unit configured to receive information indicating a communication direction for each time resource and frequency resource from a base station; and a control unit configured to control a communication to be performed in the communication direction indicated by the information in a case where the information indicating the communication direction is received.

## Description

### FIELD OF THE INVENTION

The present invention relates to a terminal, a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In addition, in NR, another duplex method is being discussed in which advantages of FDD and TDD are both enabled and the disadvantages are reduced. Specifically, a duplex method such as XDD (Cross Division Duplex), FD (Full Duplex), or the like, is being discussed.

### Citation List

### Non-Patent Document

Non-Patent Document 1: 3GPP TS 38.300 V16.6.0 (2021-06)

### SUMMARY OF THE INVENTION

### TECHNICAL PROBLEM

In the NR release 18 and 6G that is a successor system of NR, there is a possibility of discussions on the duplex method. For example, several configurations of the duplex methods can be considered depending on the frequency resource allocation and on presence or absence of support of the duplex methods by a base station and a terminal. However, there is a problem of operations of a base station and a terminal corresponding to the duplex methods being unclear.

The present invention has been made in view of the above points, and it is an object of the present invention to clarify operations of a base station and a terminal corresponding to the duplex methods.

### SOLUTION TO PROBLEM

According to the disclosed technology, a terminal is provided. The terminal includes: a reception unit configured to receive information indicating a communication direction for each time resource and frequency resource from a base station; and a control unit configured to control a communication to be performed in the communication direction indicated by the information in a case where the information indicating the communication direction is received.

### ADVANTAGEOUS EFFECTS OF INVENTION

According to the disclosed technique, a technique is provided that clarifies operations of a base station and a terminal corresponding to the duplex methods.

### BRIEF DESCRIPTION OF THE DRAWINGS

[Fig. 1] is a first drawing for describing a wireless communication system related to an embodiment of the present invention.
[Fig. 2] is a second drawing for describing a wireless communication system related to an embodiment of the present invention.
[Fig. 3] is a drawing illustrating an example of a basic procedure related to an embodiment of the present invention.
[Fig. 4] is a drawing for describing an option A-1 of a duplex method.
[Fig. 5] is a drawing for describing an option A-2 of a duplex method.
[Fig. 6] is a drawing for describing an option B-1 of a duplex method.
[Fig. 7] is a drawing for describing an option B-2 of a duplex method.
[Fig. 8] is a drawing for describing a threshold value related to an embodiment 1 of the present invention.
[Fig. 9] is a drawing illustrating an example of an XDD pattern related to an embodiment 2 of the present invention.
[Fig. 10] is a drawing for describing an operation of a terminal related to an option 1 of an embodiment 2 of the present invention.
[Fig. 11] is a drawing for describing an operation of a terminal related to an option 2-1 of an embodiment 2 of the present invention.
[Fig. 12] is a drawing for describing an operation of a terminal related to an option 2-2 of an embodiment 2 of the present invention.
[Fig. 13] is drawing illustrating an example of a functional structure of a base station related to an embodiment of the present invention.
[Fig. 14] is a drawing illustrating an example of a functional structure of a terminal related to an embodiment of the present invention.
[Fig. 15] is a drawing illustrating an example of a hardware structure of the base station or the terminal related to an embodiment of the present invention.
[Fig. 16] is a drawing illustrating an example of a structure of a vehicle related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (System configuration)

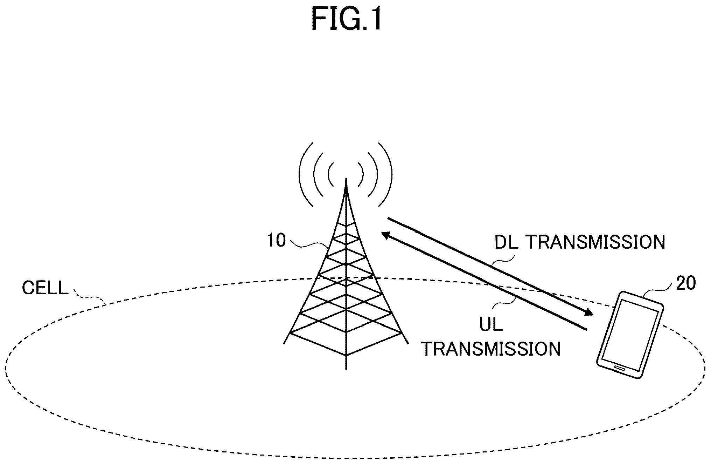

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

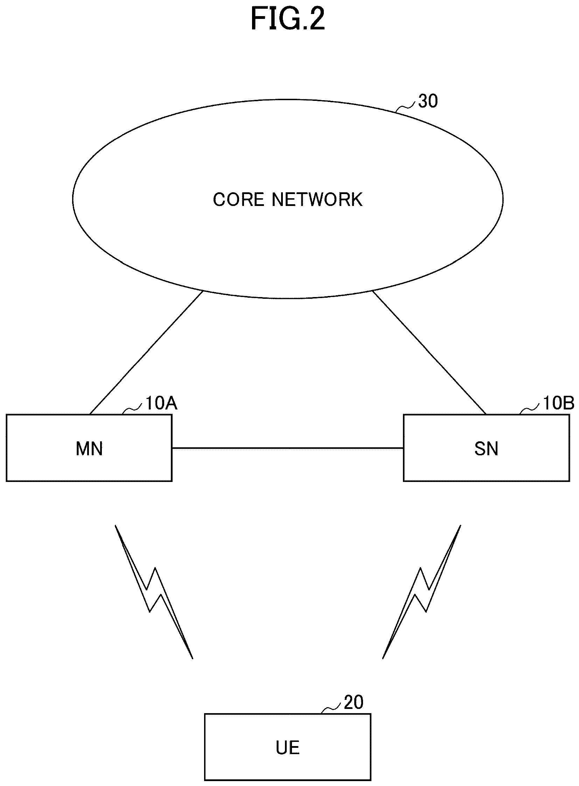

Fig. 2 is a second drawing illustrating a wireless communication system according to an embodiment of the present invention. Fig. 2 illustrates an example of a configuration of a wireless communication system in a case where dual connectivity (DC) is performed. As shown in Fig. 2, a base station 10A serving as a Master Node (MN) and a base station 10B serving as a Secondary Node (SN) are provided. The base station 10A and the base station 10B are each connected to a core network 30. The terminal 20 is enabled to communicate with both the base station 10A and the base station 10B.

A cell group provided by the base station 10A serving as an MN is called a Master Cell Group (MCG), and a cell group provided by the base station 10B serving as an SN is called a Secondary Cell Group (SCG). In addition, in the dual connectivity, the MCG includes one PCell and zero or more SCells, and the SCG includes one PSCell (Primary SCG Cell) and zero or more SCells.

The dual connectivity may be a communication method using two communication standards, and any communication standards may be combined. For example, the combination may be NR and 6G standards, or may be LTE and 6G standards. In addition, the dual connectivity may be a communication method using three or more communication standards and may be referred to as another name different from the dual connectivity.

Processing operations in this embodiment may be performed in a system configuration shown in FIG. 1, in a system configuration shown in FIG. 2, or in other system configurations.

In the 3GPP (Registered Trademark) standardization, supporting the enhanced IoT (Internet of Things) and URLLC (Ultra-Reliable and Low Latency Communication) in NR has been discussed. In addition, enhancement of HARQ-ACK (Hybrid Automatic Repeat Request Acknowledgement) is being discussed to address URLLC requirements.

### (Basic operation)

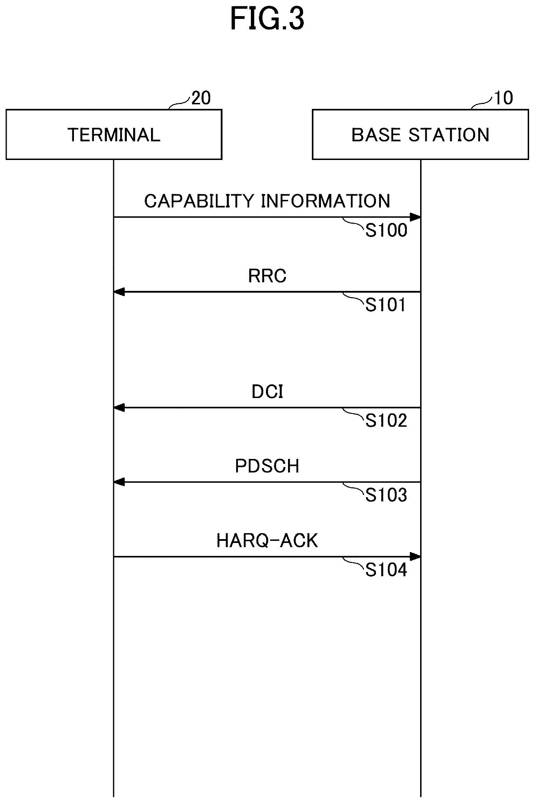

Fig. 3 is a drawing illustrating an example of a basic procedure related to an embodiment of the present invention. First, an example of a basic operation in a wireless communication system according to an embodiment of the present invention will be described with reference to Fig. 3.

In S100, the terminal 20 transmits capability information (UE capability) to the base station 10. The base station 10 can determine, for example, the content of the information to be transmitted to the terminal 20 in the following S101 and S102 based on the capability information.

In S101, the base station 10 transmits configuration information to the terminal 20 via an RRC message, and the terminal 20 receives the configuration information. The configuration information is, for example, configuration information related to a K1 set and a TDRA table as described below. Both the K1 set and the TDRA table may be indicated from the base station 10 to the terminal 20, or may be predetermined by technical specifications or the like, and the base station 10 and the terminal 20 may use the predetermined K1 set and TDRA table. In addition, the TDRA table may be referred to as time domain resource assignment configuration information.

In S102, the base station 10 transmits, to the terminal 20, scheduling (allocation information) for a plurality of PDSCHs via a DCI, and the terminal 20 receives the DCI. In addition, the DCI also includes information related to uplink resources for transmitting HARQ-ACK information.

In S103, the terminal 20 receives the PDSCHs based on the scheduling information in the DCI and transmits the HARQ-ACK information to the base station 10 in S104. The base station 10 receives the HARQ-ACK information.

### (Duplex method)

Next, duplex methods will be described. In LTE, the frequency division duplex (FDD) is mainly implemented and the time division duplex (TDD) is also supported.

In NR, TDD is mainly discussed and FDD is also supported. As an example, the LTE band migration can be listed.

Regarding the FDD, the downlink and uplink simultaneous transmission can be listed as an advantage. According to the above operation, the communication delay can be reduced. However, the resource ratio between the downlink and uplink cannot be flexibly changed, and the resource ratio is fixed to one to one, for example.

Regarding the TDD, the resource amount of downlink or uplink can be easily changed, which is listed as an advantage. In the typical environment in which there is a larger amount of downlink communication, the downlink throughput can be improved by increasing the downlink resources. However, there is a possibility of degraded delay performance and degraded uplink coverage due to the small amount of uplink time resources.

Therefore, in NR, another duplex method is being discussed in which advantages of FDD and TDD are both enabled and the disadvantages are reduced. Specifically, a duplex method such as XDD (Cross Division Duplex), FD (Full Duplex), or the like, is being discussed.

The XDD is a duplex method in which transmission and reception are simultaneously performed by one of or both of a base station and a terminal by using resources of the same time and different frequencies.

The FD is a duplex method in which transmission and reception are simultaneously performed by one of or both of a base station and a terminal by using the same frequency and time resources.

There is a possibility that the duplex methods of XDD and FD will be discussed in the NR release 18 and 6G. For example, several configurations of the following duplex methods can be considered depending on the frequency resource allocation and on presence or absence of support of the duplex methods by a base station and a terminal.

### <Option A-1>

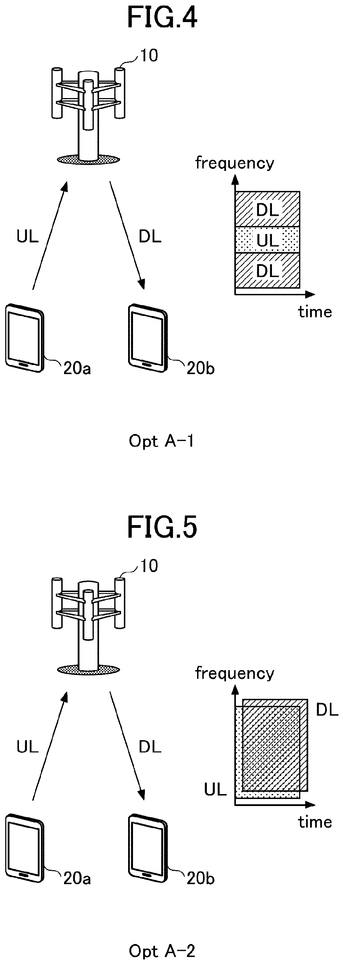

Fig. 4 is a drawing for describing an option A-1 of a duplex method. The duplex method of an option A-1 is a method in which the frequency resources are divided into uplink resources and downlink resources. In addition, the same terminal assumes only a one-way communication. The same base station performs a bidirectional communication simultaneously with different terminals.

For example, as illustrated in Fig. 4, the base station 10 performs an uplink transmission with a terminal 20a and performs a downlink transmission with a terminal 20b by using the same time resources.

In the option A-1, information indicating communication directions of time resources and frequency resources is configured for each base station. The duplex method of the option A-1 is different from FDD in that the downlink only communication and the uplink only communication are available and in that the gap distance between bands is different from that of FDD.

### <Option A-2>

Fig. 5 is a drawing for describing an option A-2 of a duplex method. The duplex method of the option A-2 is a method in which there is an overlap between the uplink frequency resources and the downlink frequency resources. In addition, the same terminal assumes only a one-way communication. The same base station performs a bidirectional communication simultaneously with different terminals.

For example, as illustrated in Fig. 5, the base station 10 performs an uplink transmission with a terminal 20a and performs a downlink transmission with a terminal 20b by using the same time resources and the same frequency resources.

In the option A-2, information indicating communication directions of time resources and frequency resources is configured for each base station and for each terminal. With respect to the above, it is necessary to clarify an operation in a case where a downlink communication collides with a downlink communication in a terminal.

### <Option B-1>

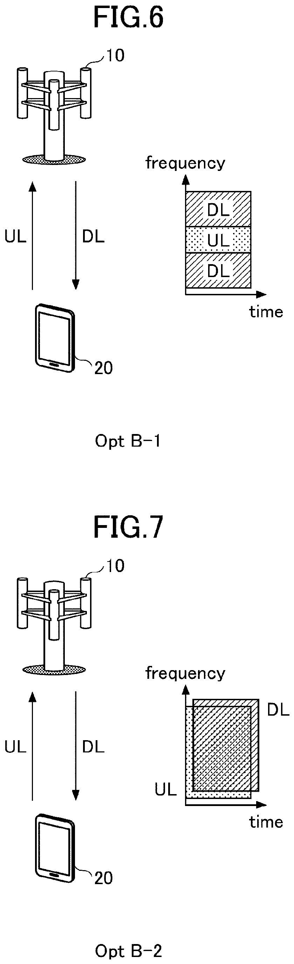

Fig. 6 is a drawing for describing an option B-1 of a duplex method. The duplex method of an option B-1 is a method in which the frequency resources are separated for uplink and downlink. In addition, the same terminal is assumed to perform a bidirectional communication. The same base station performs a bidirectional communication simultaneously with the same terminal.

For example, as illustrated in Fig. 6, the base station 10 and the terminal 20 perform an uplink communication and a downlink communication by using the same time resources and by using frequency resources different from each other.

In the option B-1, information indicating communication directions of time resources and frequency resources is configured for each base station. Specifically, information that indicates communication directions of time resources and frequency resources as a pattern is configured based on the terminal limitations.

### <Option B-2>

Fig. 7 is a drawing for describing an option B-2 of a duplex method. The duplex method of the option B-2 is a method in which there is an overlap between the uplink frequency resources and the downlink frequency resources. In addition, the same terminal is assumed to perform a bidirectional communication. The same base station performs a bidirectional communication simultaneously with the same terminal.

For example, as illustrated in Fig. 7, the base station 10 and the terminal 20 perform an uplink communication and a downlink communication by using the same time resources and by using the same time resources.

In the option B-2, information indicating communication directions of time resources and frequency resources is configured for each base station and for each terminal. In this case, there is no impact on the technical specifications in a case where any channel or signal can be transmitted. However, there is an impact on the technical specifications if the signal transmission method is to be changed, for example, the beam or power is to be changed at the time of collision.

### (Problem of conventional technique)

In NR, there is a problem in that the technical specifications for the above-described option B-1 are not clear. For example, it is necessary to clarify a condition for simultaneously performing a bidirectional communication including downlink and uplink. In addition, it is necessary to clarify how to implement an operation of performing a bidirectional communication including downlink and uplink.

For example, a method can be considered in which information that indicates communication directions for each of the time resources and the frequency resources as a pattern is to be configured from the base station 10 to the terminal 20. Here, in a case where the information is received, it is necessary to specify the timing at which the pattern indicated by the information is to be applied.

In addition, it is necessary to specify the contents of an operation under the environment in which a terminal that supports the duplex method and a terminal that does not support the duplex method coexist.

### (Overview of embodiment)

Therefore, in order to solve the above-described problem of the conventional technique, an example will be described in which the technical specifications for the duplex method, particularly an option B-1, are clarified. Hereinafter, embodiments from an embodiment 1 to an embodiment 3 will be described as specific embodiments of the present invention.

### (Embodiment 1)

In this embodiment, a reference condition for simultaneously performing the bidirectional communication including downlink and uplink will be described. The terminal 20 may simultaneously perform the bidirectional communication including downlink and uplink by using different frequency bands in a case where one of or both of the following conditions is (are) satisfied. It is to be noted that the condition for simultaneously performing the bidirectional communication including downlink and uplink is not required to be specified for the terminal 20.

### <Condition 1>

The terminal 20 may simultaneously perform the bidirectional communication including downlink and uplink by using different frequency bands in a case where a condition related to the relationship between the beams that form the downlink and uplink wireless radio waves is satisfied.

For example, the terminal 20 may simultaneously perform the bidirectional communication including downlink and uplink by using different frequency bands in a case where the downlink beam and the uplink beam are the same. In other words, the terminal 20 may transmit a UL channel corresponding to a DL channel by using the same beam as that of the DL channel.

For example, in a case where the terminal 20 receives a PDSCH and transmits a HARQ-ACK (for example, PUCCH or PUSCH) corresponding to the PDSCH, the HARQ-ACK may be transmitted by using the same beam as that of the PDSCH. It is to be noted that, in a case where beams are the same, the beams may be beams included in the same cell.

In addition, the terminal 20 may simultaneously perform the bidirectional communication including downlink and uplink by using different frequency bands in a case where the downlink beam and the uplink beam are different. In other words, the terminal 20 may transmit a UL channel corresponding to a DL channel by using a beam that is different from that of the DL channel.

For example, in a case where the terminal 20 receives a PDSCH and transmits a HARQ-ACK (for example, PUCCH or PUSCH) corresponding to the PDSCH, the HARQ-ACK may be transmitted by using a beam that is different from that of the PDSCH.

It is to be noted that, in a case where beams are different, the beams may be beams included in cells different from each other.

The terminal 20 assumes an operation of a downlink transmission only or an uplink transmission only in a case where the above-described condition is not satisfied.

### <Condition 2>

The terminal 20 may simultaneously perform the bidirectional communication including downlink and uplink by using different frequency bands in a case where a condition related to one of or both of: the frequency gap width between downlink and uplink; and the uplink bandwidth, is (are) satisfied.

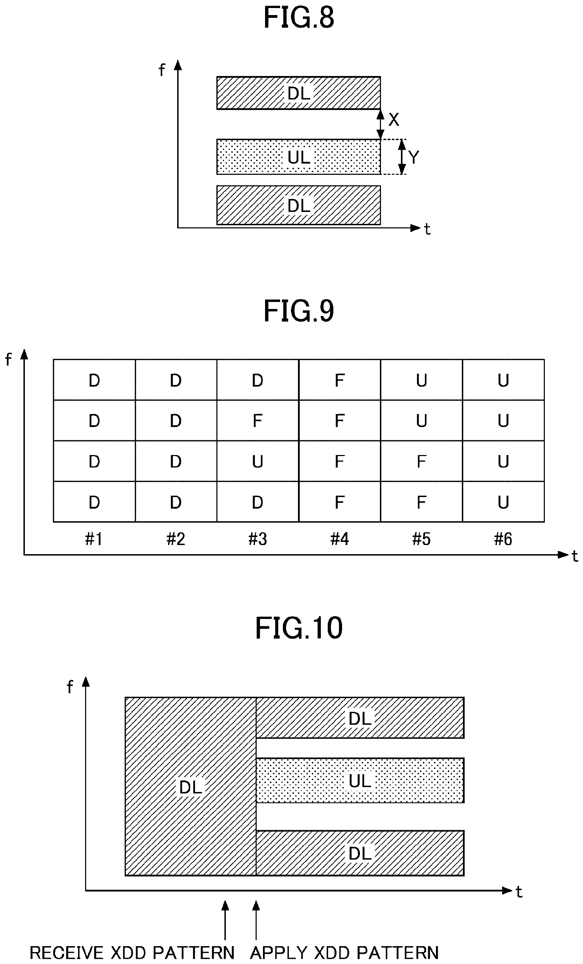

Fig. 8 is a drawing for describing a threshold value related to an embodiment 1 of the present invention. For example, the terminal 20 may simultaneously perform the bidirectional communication including downlink and uplink by using different frequency bands in a case where the frequency gap width between downlink and uplink is greater than the specified threshold value X.

Alternatively, the terminal 20 may simultaneously perform the bidirectional communication including downlink and uplink by using different frequency bands in a case where the uplink bandwidth is less than the specified threshold value Y.

In addition, the terminal 20 may simultaneously perform the bidirectional communication including downlink and uplink by using different frequency bands in a case where the frequency gap width between downlink and uplink is greater than the specified threshold value X and where the uplink bandwidth is less than the specified threshold value Y.

It is to be noted that the above-described "in a case where ... is greater than the threshold value X" may be "in a case where ... is equal to or greater than the threshold value X", may be "in a case where ... is less than the threshold value X", may be "in a case where ... is equal to or less than the threshold value X", or the like. Similarly, the above-described "in a case where ... is less than the threshold value Y" may be "in a case where ... is equal to or less than the threshold value X", may be "in a case where ... is greater than the threshold value X", may be "in a case where ... is equal to or greater than the threshold value X", or the like.

In addition, the terminal 20 may simultaneously perform the bidirectional communication including downlink and uplink by using different frequency bands, based on the relationship between: the frequency gap width between downlink and uplink; and the uplink bandwidth. For example, the terminal 20 may simultaneously perform the bidirectional communication including downlink and uplink by using different frequency bands: in a case where the frequency gap width is greater than the uplink bandwidth in response to comparing the frequency gap width between downlink and uplink with the uplink bandwidth; or based on a result of comparing the frequency gap width with the uplink bandwidth after applying adjustment using a coefficient to one of the frequency gap width or the uplink bandwidth.

One of or both of the threshold value X and the threshold value Y may be a fixed value specified by the technical specifications, or may be changed according to at least one of the following methods.

### <Method 1>

The terminal 20 may transmit information indicating one of or both of the threshold value X and the threshold value Y to the base station 10 as information indicating the terminal capability. In addition, the terminal 20 may transmit information indicating a reference value used for determining one of or both of the threshold value X and the threshold value Y to the base station 10 as information indicating the terminal capability.

For example, the terminal 20 may report the value indicating the frequency gap width (that is, the guard bandwidth), the uplink bandwidth, or the like, for each resource block to the base station 10 as the terminal capability.

### <Method 2>

The terminal 20 may assume that one of or both of the threshold value X and the threshold value Y is (are) to be configured by the base station 10. In addition, the terminal 20 may assume that the reference value for determining one of or both of the threshold value X and the threshold value Y is to be configured by the base station 10.

For example, the terminal 20 may assume that the value indicating the frequency gap width (that is, the guard bandwidth), the uplink bandwidth, or the like, for each resource block is to be configured as an upper layer parameter by the base station 10.

It is to be noted that the terminal 20 may assume an operation of a downlink transmission only or an uplink transmission only in a case where the above-described condition is not satisfied.

According to this embodiment, it is possible to clarify when the terminal 20 simultaneously performs the bidirectional communication including downlink and uplink using different frequency bands.

### (Embodiment 2)

In this embodiment, an example will be described in which, in a case where information indicating communication directions for each of the time resources and the frequency resources as a pattern is configured from the base station 10 to the terminal 20, the timing at which the terminal 20 applies the pattern indicated by the information is specified. Hereinafter, the information indicating the communication directions for each of the time resources and the frequency resources is referred to as an XDD pattern.

Fig. 9 is a drawing illustrating an example of an XDD pattern related to an embodiment 2 of the present invention. The XDD pattern is information indicating communication directions for each of the frequency domain and the time domain.

The granularity of the time domain may be the same as NR. In other words, the granularity of the time domain may be a level of slots or symbols. In addition, the granularity of the frequency domain may be a level of resource blocks (RB), RB bundles, or sub-bands.

In addition, the size of the frequency domain indicated by an XDD pattern (band) may be indicated by cells, CCs (Component Carrier), or BWPs (Bandwidth Part).

The XDD pattern includes "D" that indicates that the communication direction is downlink and "U" that indicates that the communication direction is uplink for each frequency unit and for each time unit. It is to be noted that the XDD pattern may include "F" that indicates that the communication direction can be uplink or downlink.

The terminal 20 may receive information in which values of "D", "U", or "F" are arranged in order of frequency-first or time-first in the configuration or indication of the XDD pattern from the base station 10.

For example, in the configuration or indication of the XDD pattern illustrated in Fig. 9, the terminal 20 may receive information indicating a value of "DDDDDDDDDFUDFFFFUUFFUUUU" that is information in which values of "D", "U", or "F" are arranged in order of frequency-first from the base station 10.

In addition, the terminal 20 related to this embodiment may perform one of the options described below in a case where information indicating the XDD pattern is received from the base station 10.

### <Option 1>

The terminal 20 may apply the XDD pattern immediately after the reception of information indicating the XDD pattern.

Fig. 10 is a drawing for describing an operation of a terminal related to an option 1 of an embodiment 2 of the present invention. In a case where the XDD pattern is dynamically configured via a control channel, the terminal 20 may apply the XDD pattern to slots from the subsequent slot or symbol of a slot or symbol in which the control channel is received.

In addition, after applying the XDD pattern, the terminal 20 may assume that the downlink communication will not be received or the terminal 20 is not required to transmit the uplink communication in a case where the timing of the scheduled downlink or uplink communication is not aligned with the downlink or uplink timing specified by the XDD pattern.

### <Option 2>

The terminal 20 may apply the XDD pattern after an elapse of reference time from the reception of information indicating the XDD pattern. In this case, the terminal 20 may assume that the reference time is to be determined according to one of the following options.

### <Option 2-1>

The terminal 20 may assume that the reference time is specified in advance.

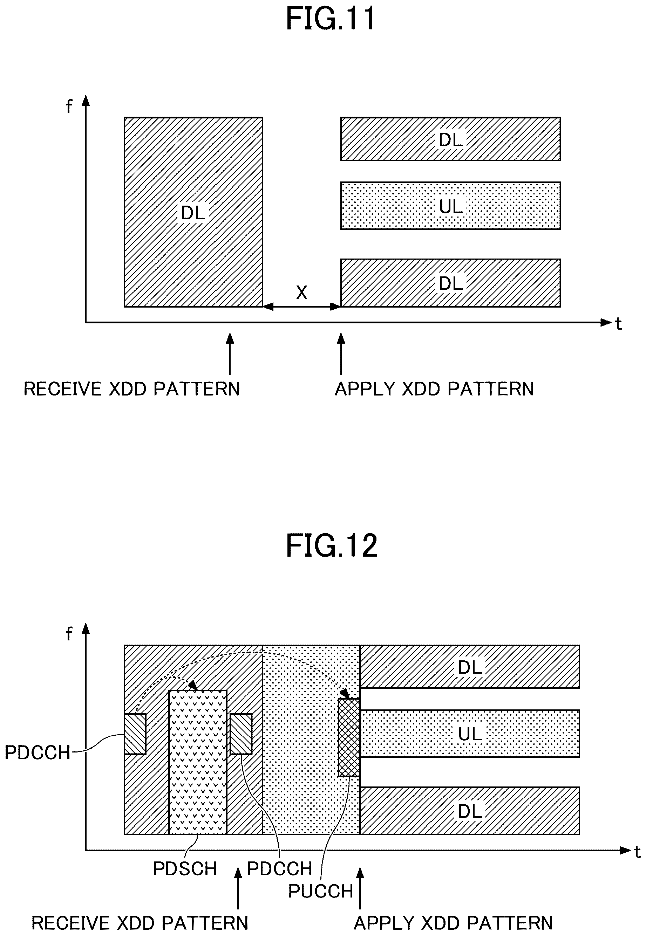

Fig. 11 is a drawing for describing an operation of a terminal related to an option 2-1 of an embodiment 2 of the present invention. The terminal 20 may apply the XDD pattern after an elapse of the specified reference time X from the starting or ending symbol for receiving the control information including the XDD pattern.

In addition, the terminal 20 may apply the XDD pattern after an elapse of the specified reference time X after the reception of upper layer information including the XDD pattern.

The value indicating the reference time X may be a value of units of symbols, slots, seconds, or milliseconds.

The information indicating the reference time X may be specified by the methods described below.

### <Method 1>

The terminal 20 may assume that the reference time X is specified in the technical specifications.

### <Method 2>

The terminal 20 may assume that the information indicating the reference time X is configured as an upper layer parameter by the base station 10.

### <Method 3>

The terminal 20 may assume that the information indicating the reference time X is to be indicated by the base station 10.

### <Method 4>

The terminal 20 may transmit information indicating the reference time X to the base station 10 as information indicating the terminal capability. In this case, the terminal 20 may assume that the information indicating the reference time X is to be determined by the base station 10 based on the information indicating the terminal capability.

### <Method 5>

The terminal 20 may assume that the information indicating the reference time X is specified according to a combination of the above-described method 1 to method 4.

The terminal 20 may assume that the information indicating the reference time X is to be explicitly or implicitly configured or indicated by the base station 10. In addition, the terminal 20 may explicitly or implicitly report the information indicating the reference time X to the base station 10.

### <Option 2-2>

The terminal 20 may apply the XDD pattern by using the completion of transmission and reception of the specified channel or signal as a trigger. In other words, the terminal 20 may assume that the reference time X is a time until the transmission and reception of the specified channel or signal.

Fig. 12 is a drawing for describing an operation of a terminal related to an option 2-2 of an embodiment 2 of the present invention. Regarding the downlink channel and the uplink channel that are scheduled before receiving the information indicating the XDD pattern, the terminal 20 may apply the received XDD pattern after the completion of transmissions of the said downlink channel and the said uplink channel.

In other words, regarding the downlink channel and the uplink channel that are scheduled before receiving the information indicating the XDD pattern, the terminal 20 is not required to apply the XDD pattern indicated by the received information until the completion of transmissions of the said downlink channel and the said uplink channel.

For example, as illustrated in Fig. 12, in a case where a PDCCH indicating a PDSCH and a HARQ-ACK is received before receiving information indicating the XDD pattern and where the information indicating the XDD pattern is received before the completion of transmission of the HARQ-ACK, the terminal 20 may apply the XDD pattern indicated by the received information after the completion of transmission of the HARQ-ACK.

In addition, regarding the semi-statically scheduled channel such as the CG (Configured Grant) PUSCH or SPS (Semi-Persistent Scheduling), the terminal 20 may apply the XDD pattern without waiting for the transmission completion, or may apply the XDD pattern after the transmission completion.

According to this embodiment, in a case where information indicating communication directions for each of the time resources and the frequency resources as a pattern is received by the terminal 20, the timing of applying the pattern indicated by the information can be clarified.

### (Embodiment 3)

In this embodiment, an example will be described in which contents of an operation under the environment in which a terminal that supports the frequency division duplex and a terminal that does not support the frequency division duplex coexist are specified. It is to be noted that the terminal that supports the frequency division duplex may be a terminal that supports FDD, may be a terminal that supports XDD, or may be a terminal that supports FD. In addition, the terminal that does not support the frequency division duplex may be a terminal that does not support FDD, may be a terminal that does not support XDD, or may be a terminal that does not support FD.

Hereinafter, the terminal 20 that supports the frequency division duplex is referred to as a supporting terminal and the terminal 20 that does not support the frequency division duplex is referred to as a non-supporting terminal.

In a case where a supporting terminal and a non-supporting terminal are located in the same cell, the supporting terminal and the non-supporting terminal may each assume one of the following operations.

It is to be noted that, as a prerequisite, the terminal 20 may report the terminal capability indicating whether or not the frequency division duplex is supported to the base station 10. The information indicating the terminal capability may be explicit information, or may be implicit information in which the support of the duplex method is indicated according to information indicating the value, such as the frequency gap width, the uplink bandwidth, or the like, described in the embodiment 1.

In addition, the supporting terminal may be a terminal that reports the terminal capability, and the non-supporting terminal may be a terminal that does not report the terminal capability.

### <Option 1>

In a case where a supporting terminal and a non-supporting terminal are located in the same cell, base stations 10 and terminals 20 (including the supporting terminal and the non-supporting terminal) performing communications in the cell may perform a fallback to the duplex method according to TDD.

In other words, the terminals 20 may assume that the XDD information will not be received. It is to be noted that the base station 10 may transmit information for configuring the TDD pattern to the terminals 20.

The fallback to the duplex method according to TDD may be explicitly indicated, or is not required to be indicated, from the base station 10 to the supporting terminal via an upper layer parameter, a control channel, or the like.

The fallback indication to the duplex method according to TDD may be an indication enabling or disabling the XDD.

### <Option 2>

In a case where a supporting terminal and a non-supporting terminal are located in the same cell, the non-supporting terminal may perform communication only in a section of the duplex method according to TDD.

The XDD pattern may include a section in which the entire frequency band is allocated to uplink only or is allocated to downlink only (referred to as a TDD section). The non-supporting terminal may perform transmission and reception including downlink or uplink only in the TDD section, and is not required to perform transmission and reception including downlink or uplink in a section other than the TDD section (referred to as an XDD section).

It is to be noted that the XDD section may mean a section in which the band is partially allocated to downlink or uplink.

The non-supporting terminal may assume that the XDD section is a section including downlink alone. Regarding the above-described downlink, the base station 10 is not required to perform transmission of a downlink channel for the non-supporting terminal. According to the above-described operation, the XDD section is guaranteed to be a section in which transmission and reception including downlink or uplink are not performed by the non-supporting terminal.

It is to be noted that an operation of the terminal 20 in a case where the information indicating the XDD pattern is received may be one of the following.

### <Operation 1>

The terminal 20 may assume that the information indicating the XDD pattern is configured by an upper layer parameter. In this case, the non-supporting terminal may assume that the XDD section is a section of downlink or of no communication. In other words, the non-supporting terminal may assume that the uplink transmission is not performed in the XDD section.

### <Operation 2>

The terminal 20 may assume that the TDD pattern (for example, TDD configuration) and the XDD pattern are respectively configured by different upper layer parameters. In this case, the supporting terminal may assume that one of or both of the two upper layer parameters is (are) to be configured. In addition, in a case where both of the upper layer parameters are configured, the supporting terminal may apply only the XDD pattern. In addition, the non-supporting terminal may assume that the parameter for configuring the TDD pattern will be configured.

According to this embodiment, contents of an operation under the environment in which a terminal that supports the frequency division duplex and a terminal that does not support the frequency division duplex coexist can be clarified.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

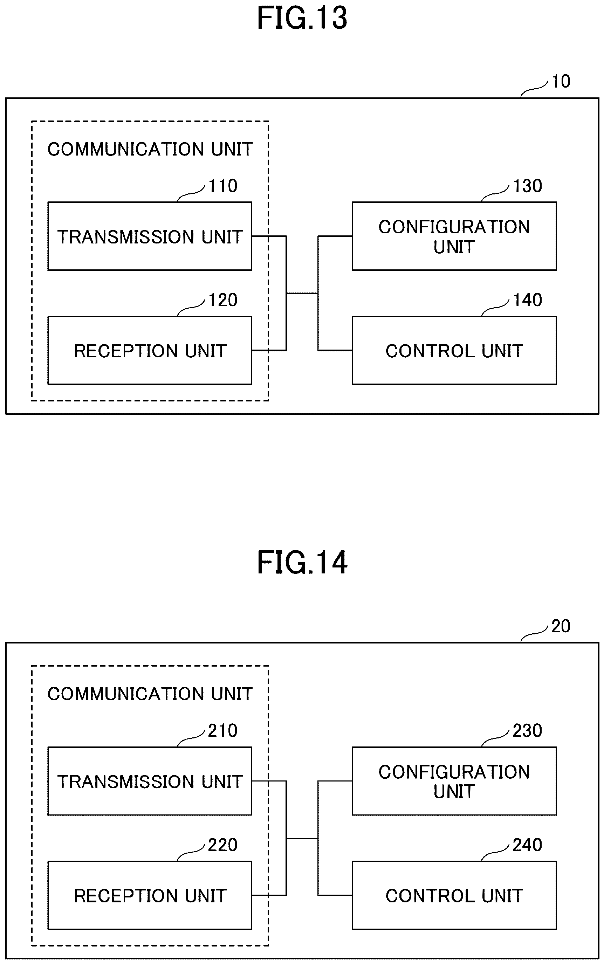

Fig. 13 is a drawing illustrating an example of a functional configuration of the base station. As shown in Fig. 13, the base station 10 includes a transmission unit 110, a reception unit 120, a configuration unit 130, and a control unit 140. The functional configuration illustrated in Fig. 13 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 14 is a drawing illustrating an example of a functional configuration of the terminal. As shown in Fig. 14, the terminal 20 includes a transmission unit 210, a reception unit 220, a configuration unit 230, and a control unit 240. The functional configuration illustrated in Fig. 14 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following paragraphs. In addition, a communication method below may be performed.

### <Configuration related to an embodiment of the present invention>

### (First item)

A terminal including:
a reception unit configured to receive information indicating a communication direction for each time resource and frequency resource from a base station; and
a control unit configured to control a communication to be performed in the communication direction indicated by the information in a case where the information indicating the communication direction is received.

### (Second item)

The terminal as described in the first item, wherein
the control unit controls a communication to be performed in the communication direction indicated by the information immediately after receiving the information indicating the communication direction.

### (Third item)

The terminal as described in the first item or the second item, wherein
the control unit controls a communication to be performed in the communication direction indicated by the information after an elapse of a reference time after receiving the information indicating the communication direction.

### (Fourth item)

The terminal as claimed in any one of the first item to the third item, wherein
the control unit controls a communication to be performed in the communication direction indicated by the information by using a completion of transmission and reception of a specified channel or signal as a trigger in a case where the information indicating the communication direction is received.

### (Fifth item)

A base station comprising:
a transmission unit configured to transmit information indicating a communication direction for each time resource and frequency resource to a terminal; and
a control unit configured to assume that the terminal performs a communication in the communication direction indicated by the information at a specified timing in a case where the terminal receives the information indicating the communication direction.

### (Sixth item)

A communication method performed by a terminal, the communication method including:
receiving information indicating a communication direction for each time resource and frequency resource from a base station; and
controlling a communication to be performed in the communication direction indicated by the information in a case where the information indicating the communication direction is received.

According to any one of the above-described configurations, a technique is provided that clarifies an operation of a base station or a terminal that supports the duplex method. According to the second item, it is possible to cause the terminal to immediately perform a communication in a specified communication direction. According to the third item, the timing at which the terminal starts the communication in the specified communication direction can be clarified based on the reference time. According to the fourth item, the timing at which the terminal starts the communication in the specified communication direction can be clarified by using the completion of transmission and reception of the specified channel or signal as a trigger.

### (Hardware structure)

In the above block diagrams used for describing an embodiment of the present invention (Fig. 13 and Fig. 14), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

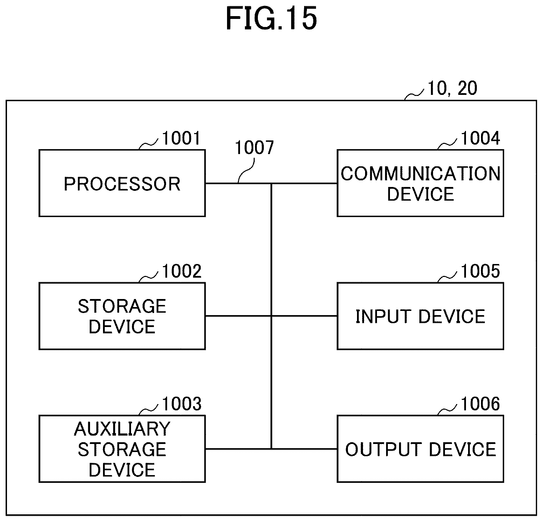

For example, the base station 10, the terminal 20, etc., according to an embodiment of the present disclosure may function as a computer for processing the radio communication method of the present disclosure. Fig. 15 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 13 may be realized by control programs that are stored in the storage device 1002 and are executed by the processor 1001. Further, for example, the control unit 240 of the terminal 20 illustrated in Fig. 14 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

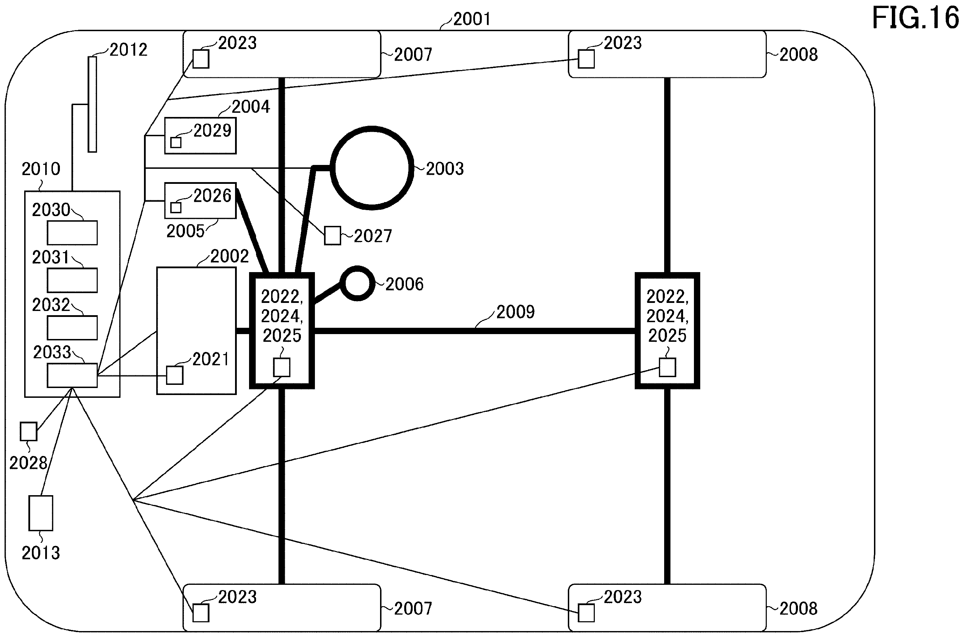

Fig. 16 shows an example of a configuration of a vehicle 2001. As shown in Fig. 16, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may be also referred to as a partial bandwidth, or the like) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive information indicating a communication direction for each time resource and frequency resource from a base station; and
a control unit configured to control a communication to be performed in the communication direction indicated by the information in a case where the information indicating the communication direction is received.

2. The terminal as claimed in claim 1, wherein
the control unit controls a communication to be performed in the communication direction indicated by the information immediately after receiving the information indicating the communication direction.

3. The terminal as claimed in claim 1 or 2, wherein
the control unit controls a communication to be performed in the communication direction indicated by the information after an elapse of a reference time after receiving the information indicating the communication direction.

4. The terminal as claimed in any one of claims 1 to 3, wherein
the control unit controls a communication to be performed in the communication direction indicated by the information by using a completion of transmission and reception of a specified channel or signal as a trigger in a case where the information indicating the communication direction is received.

5. A base station comprising:
a transmission unit configured to transmit information indicating a communication direction for each time resource and frequency resource to a terminal; and
a control unit configured to assume that the terminal performs a communication in the communication direction indicated by the information at a specified timing in a case where the terminal receives the information indicating the communication direction.

6. A communication method performed by a terminal, the communication method comprising:
receiving information indicating a communication direction for each time resource and frequency resource from a base station; and
controlling a communication to be performed in the communication direction indicated by the information in a case where the information indicating the communication direction is received.
